# EUROPÄISCHE PATENTSCHRIFT

(11) **EP 0 585 528 B1**
(45) Veröffentlichungstag und Bekanntmachung des Hinweises auf die Patenterteilung: **09.10.1996**
(21) Anmeldenummer: 93107335.7
(22) Anmeldetag: 06.05.1993
(51) Int. Cl.: B29C 47/76

(54) **Entgasungseinrichtung für eine zweiwellige Schneckenmaschine zur Aufbereitung von Kunststoffen**
Degassing device for a twin screw extruder for processing plastics
Dispositif de dégazage pour une boudineuse à ris double pour la préparation des matières plastiques

(30) Priorität: 27.08.1992 DE 4228468
(43) Veröffentlichungstag der Anmeldung: 09.03.1994
(73) Patentinhaber: Werner & Pfleiderer GmbH, 70469 Stuttgart (DE)
(72) Erfinder: Knoll, Arno, W-7000 Stuttgart 50 (DE); Woerz, Wolfgang, Dipl.-Ing. (FH), W-7132 Illingen (DE)

(56) Entgegenhaltungen:
- EP-A- 0 299 799
- DE-A- 2 654 774
- DE-A- 2 827 877
- GB-A- 1 103 897
- US-A- 4 226 671
- US-A- 4 423 960
- US-A- 5 123 828
- KUNSTSTOFFE Bd. 71, Nr. 1 , Januar 1981 , MüNCHEN, DE Seiten 18 - 26 DR.-ING. H. WERNER 'Entgasen von Kunststoffen in mehrwelligen Schneckenmaschinen'

## Beschreibung

Die Erfindung betrifft eine Entgasungsvorrichtung für eine zweiwellige Schneckenmaschine zur Aufbereitung von Kunststoffen mit einem aus mehreren Gehäuseschüssen gebildeten Gehäuse, in welchem Schneckenwellen, die miteinander kämmende Schneckenabschnitte aufweisen, in einander durchdringenden Bohrungen drehbar angeordnet sind, wobei in mindestens einem Gehäuseschuss zumindest eine radiale mit dem Innenraum einer Entgasungskammer verbundene Entgasungsöffnung vorgesehen ist, die in einem im Gehäuseinnenraum formschlüssig eingesetzten, die Kontur eines Schneckenabschnittes in Umfangsrichtung teilweise überdeckenden Einsatzteil gebildet ist.

In der Literatur - Kunststoffe 71 (1981) Heft 1,S. 18 bis 26- sind in einem Beitrag über das Entgasen von Kunststoffen in mehrwelligen Schneckenmaschinen Entgasungsvorrichtungen mit in den Gehäuseinnenraum eines Schneckengehäuses eingebautem Einsatzteil aufgezeigt, wobei die im Einsatzteil vorgesehene Entgasungsöffnung den Gehäuseinnenraum mit einem Entgasungsstutzen zur Weiterleitung der abzuführenden Dampfmengen verbindet. Der Entgasungsstutzen ist auf der Oberseite des Schneckengehäuses angeordnet und bedarf je nach rheologischem Verhalten der Kunststoffschmelze und/oder der Grössenordnung der Verfahrensparameter in der Schneckenmaschine einer besonderen Ausbildung. Schmelze wie auch Kondensationsprodukte gelangen bei solcherart angeordneten Entgasungsstutzen häufig in den zu verarbeitenden Schmelzehauptstrom, der hierdurch verunreinigt wird.

Aus der Literatur - Chemie-Ing. Technik 1962 Nr. 11 S. 751 sind weiterhin Entgasungsvorrichtungen an einwelligen Scheckenextrudern bekannt, die im Schneckengehäuse in einer seitlich nach unten gerichteten Anordnung vorgesehen sind und sich nur für Massen bestimmter Viskosität eignen.

Bei einer weiteren aus der DE 37 03 758 A1 bekannten Extrusionsvorrichtung für das Extrudieren eines Kunststoffes ist die im Seitenwandbereich des Schneckenzylinders an eine Vakuumkammer angeschlossene Entgasungsöffnung in einem Neigungswinkel zur Normalen angeordnet, so dass auch hier aus dem Schneckenzylinder austretender Kunststoff in das Verarbeitungsgut zurückgeführt wird.

Gleiches gilt für die in der US-A-5123828 offenbarten Entgasungslösung, bei der eine relativ kleine Öffnung oberhalb der Längsachse des Extruders seitlich angeordnet ist.

Ferner ist aus der DE 2827877 A 1 eine zweiwellige Schneckenmaschine bekannt, an deren Gehäuse seitlich eine runde Entgasungsöffnung mit einem ungefähr horizontal verlaufenden Kanal angeordnet ist.

In diesem Kanal ist ein Leitkörper so angeordnet, daß sich von der unteren Kanalwand nach oben eine, der ersten Schneckenwelle benachbarte, Leitfläche ergibt, die sich so weit nach oben erstreckt, daß nur noch ein schmaler Entgasungsspalt, der sich leicht zusetzen kann, im oberen Bereich der Schneckenwelle verbleibt.

Den bekannten Ausgestaltungen von Entgasungsvorrichtungen sind die Nachteile in den Hauptstrom der Kunststoffschmelze rückfliessender Kunststoffmengen oder von Kondensationsprodukten zu eigen, die insbesondere bei hohen Entgasungsleistungen in den Entgasungskanal gelangen können. Besonders gravierend wirkt sich dies dann aus, wenn hierbei ausgetragene Produktreste im Entgasungskanal anbacken und durch Abbau infolge längerfristiger Temperatureinwirkung bei Rückführung in den Schmelzehauptstrom das Verarbeitungsprodukt zwangsläufig schädigen.

Wo dies dies nicht der Fall ist, wie beispielsweise bei im Schneckengehäuse seitlich nach unten gerichteten Entgasungsöffnungen, können nur Kunststoffe in engen Viskositätsgrenzen aufbereitet werden, so dass für das Entgasen unterschiedlicher Polymerlösungen oder Schmelzen umfangreiche Umbauten der Schneckenmaschine erforderlich sind.

Ausgehend von der bekannten Entgasungsvorrichtung für mehrwellige Schneckenmaschinen (Kunststoffe BD. 71 Nr. 1, Januar 1981, München, DE Seite 23, Abbildung 11) liegt der Erfindung die Aufgabe zugrunde, eine Entgasungseinrichtung für mehrwellige Schneckenmaschinen vorzusehen, die auf einfache Weise eine wirksame Entfernung flüchtiger Bestandteile innerhalb eines breiten Viskositätsbereiches ermöglicht.

Dies ist nach der Erfindung mit den gattungsbildenden Merkmalen des Anspruches 1 dadurch erreicht, dass die Entgasungsöffnung die Form einer zum Innenraum der Entgasungskammer hin sich gleichförmig erweiternden Kegelbohrung aufweist, deren Längsachse in einer zwischen den Längsachsen der Schneckenwellen aufgespannten Ebene liegt.

Zweckmäßige Weiterbildungen der Erfindung sind in den abhängigen Ansprüchen beschrieben.

Das in den Gehäuseinnenraum eines Gehäuseschusses formschlüssig eingefügte Einsatzteil ermöglicht in seiner horizontalen Zuordnung zu den beiden Schneckenwellen einen seitlichen Abzug flüchtiger Bestandteile aus dem Gehäuseinnenraum, ohne Rückfluss von Produktbestandteilen in den Produkthauptstrom.

Die Ausgestaltung der Entgasungsöffnung in Form einer symmetrisch zu ihrer Längsachse sich nach aussen erweiternden Kegelbohrung begünstigt nicht nur diesen Effekt, sondern ermöglicht den Einsatz der Entgasungsvorrichtung für die vielfältigsten Entgasungsaufgaben ohne besonderen Umbau des betreffenden Gehäuseschusses als Verfahrensteil.
So lässt sich in Abhängigkeit der Viskosität der aufzubereitenden Kunststoffschmelze im Schneckenextruder ohne besonderen Umbau des Verfahrensteils achsgleich mit der Ebene der beiden Schneckenwellenachsen das Einsatzteil wahlweise auf der einen oder anderen Seite des Schneckenextruders anbringen.
Bei hochzähen Produkten wird in der einen Anordnung die Kunststoffschmelze entgegen der Schwerkraft nach oben gefördert, im anderen Falle bei niederviskosen Produkten und geringer Adhäsion nach unten.

Eine weitgehend grosse Entgasungsfläche längs des Verfahrensteils ist nach den Merkmalen des Anspruches 3 erreicht.

Neben einer leicht zu handhabenden Anordnung werden in einer weiteren Ausgestaltung nach den Merkmalen des Anspruches 4 auch entscheidende Verbesserungen in der Entgasungsleistung des Schneckenextruders erzielt. Dabei bleibt die Aussenkontur der Schneckenmaschine weitgehend unverändert, so dass eine effektive Beheizung des Verfahrensteils mit Gehäuseheizschalen ungehindert erreicht ist.

Eine weitere Massnahme nach den Merkmalen des Anspruches 5 fördert die Oberflächenhaftung der Produktschmelze an den Schnecken und verhindert weitgehend deren Übertritt in die Entgasungsöffnung.

Bei hohen Entgasungsleistungen und/oder hochzähen Produkten ist es vorteilhaft eine mehrfache Entgasung vorzunehmen. Dies ist in einer Ausbildung nach den Merkmalen des Anspruches 6 in besonderer Weise dadurch erreicht, wenn in einer Querschnittsebene des Schneckenextruders zwei Entgasungsöffnungen vorhanden sind und somit das Produkt in Bezug auf die Drehrichtung der Welle den unmittelbar aufeinanderfolgenden Entgasungsöffnungen dem Einfluss einer Entgasung ausgesetzt wird.

Die Ausgestaltung nach den Merkmalen des Anspruches 6 wiederum ermöglicht eine einfache Umrüstung der der Entgasung dienenden Verfahrensteile, wenn im Bedarfsfalle nur eine Entgasungsöffnung benötigt wird. Ein Austausch des Verfahrensteils ist nicht erforderlich.

In der nachfolgenden Beschreibung von drei Ausführungsbeispielen ist die Erfindung näher erläutert.

Hierin zeigen
- Fig. 1: eine Gesamtansicht einer Schneckenmaschine
- Fig. 2: einen Schnitt durch die Entgasungsvorrichtung gemäss der Schnittlinie II-II in Fig. 1 mit in Förderrichtung des Schneckenextruders rechtsseitig angeordneter Entgasung
- Fig. 3: einen Schnitt durch die Entgasungsvorrichtung entsprechend Fig. 2, jedoch mit in Förderrichtung des Schneckenextruders linksseitig angeordneter Entgasung
- Fig. 4: einen Schnitt durch die Entgasungsvorrichtung entsprechend Fig. 2 in einer weiteren Ausgestaltung
Der in der Zeichnung dargestellte zweiwellige Schneckenextruder besteht aus einem Gehäuse 1, das aus mehreren Gehäuseschüssen 2,3,4,5 und einer Auspressdüse 6 gebildet ist, die in axialer Aufeinanderfolge jeweils mittels Flansche 7 aneinandergeflanscht sind. Im Gehäuse 1 sind zwei achsparallele und einander durchdringende Bohrungen 8,9 ausgebildet. Weiterhin sind im Gehäuse 1 zwei kämmend ineinandergreifende Schneckenabschnitte 10,11 gelagert, die in einer konzentrischen Anordnung zu den Längsachsen 12,13 der Bohrungen 8,9 von einem Motor 14 über ein Getriebe 15 angetrieben werden. Der erste Gehäuseschuss 2 ist zur Aufgabe des zu bearbeitenden Produkts mit einem Einlasstrichter 16 bestückt. Das Produkt wird in den Gehäuseschüssen 2 und 3 gefördert und komprimiert, sowie im nachfolgenden Gehäuseschuss 4 entspannt und einer Entgasung unterworfen. Der weitere Gehäuseschuss 5 dient wiederum der Kompression des Produktes für den nachfolgenden Ausstoss aus der Auspressdüse 6.

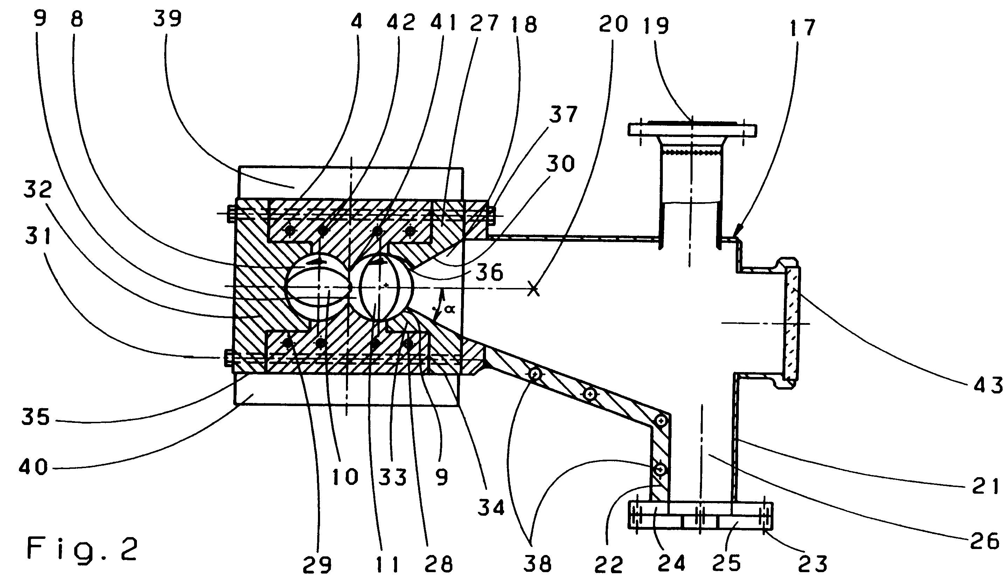

An den Gehäuseschuss 4 ist wie insbesondere Fig. 2 zeigt in seitlicher Zuordnung an ein Einsatzteil 27 eine Entgasungskammer 17 mittels Schraubverbindung 37 luftdicht angeflanscht. Hierbei mündet eine in das Gehäuse 1 führende Entgasungsöffnung 18, deren Längsachse 20 horizontal in der zwischen den Längsachsen 12,13 der Gehäusebohrungen 8,9 aufgespannten Ebene verläuft, in die Entgasungskammer 17, die mit einem Vakuumanschluss 19 versehen sein kann.

Die Entgasungskammer 17 ist aus den Seitenwänden 21,22, einer mittels Schraubverschlüssen 23 im unteren Bereich der Seitenwände 21,22 befestigten Bodenplatte 24 und mit einem Deckel 25 gebildet. Zur Beobachtung des Innenraums 26 der Entgasungskammer 17 dient ein Schauglas 43 das aus durchsichtigem Material besteht. Zur Vermeidung sich ablagernden Kunststoffes ist die Seitenwand 22 bis in den Bereich der Bodenplatte 24 mittels Heizstäben 38 intensiv beheizt. Hierzu können auch von aussen an die Seitenwand 22 angebrachte, jedoch hier nicht näher dargestellte Heizschalen dienen. Bei Abnahme des an der Bodenplatte 24 befestigten Deckels 25 kann der sich im Innenraum 26 der Entgasungskammer 17 ansammelnde und verschmutzte Kunststoff leicht entfernt werden.

Das in flanschförmiger Ausgestaltung mit der Entgasungskammer 17 luftdicht verbundene Einsatzteil 27 ist im Gehäuseschuss 4 formschlüssig in eine rechteckförmige Aussparung 28 eingesetzt.
Eine weitere symmetrische zur vertikalen Mittenebene der beiden Längsachsen 12,13 und damit spiegelbildlich dem Einsatzteil 27 gegenüberliegend und gleich ausgestaltete weitere Aussparung 29 dient ebenfalls der Aufnahme eines hier die Aussparung 29 verschliessenden Einsatzes 32.
In dem in Fig. 2 gezeigten Beispiel ist die Aussparung 29 somit durch den mit dem Gehäuseschuss 4 über eine Schraubverbindung 31 befestigten Einsatz 32 dicht verschlossen.
Zum Zwecke der Ausbildung als Entgasungsöffnung 18 ist im Einsatzteil 27 eine Kegelbohrung 30 eingearbeitet, deren Längsachse 20 die Längsachse der Entgasungsöffnung 18 bildet und die beiden Längsachsen 12,13 der Schneckenabschnitte 10,11 schneidet.

Hierbei ist die Kegelbohrung 30 so gestaltet, dass sich diese unter einem Kegelwinkel α von zumindest 10° in Bezug zu ihrer Längsachse 20 bis in den Innenraum 26 der Entgasungskammer 17 hin öffnet. Der Innenraum 26 der Entgasungskammer 17 ist daher im Bereich des Anschlusses an das Einsatzteil 27 zumindest teilweise ebenfalls unter diesem Winkel kegelförmig gestaltet.

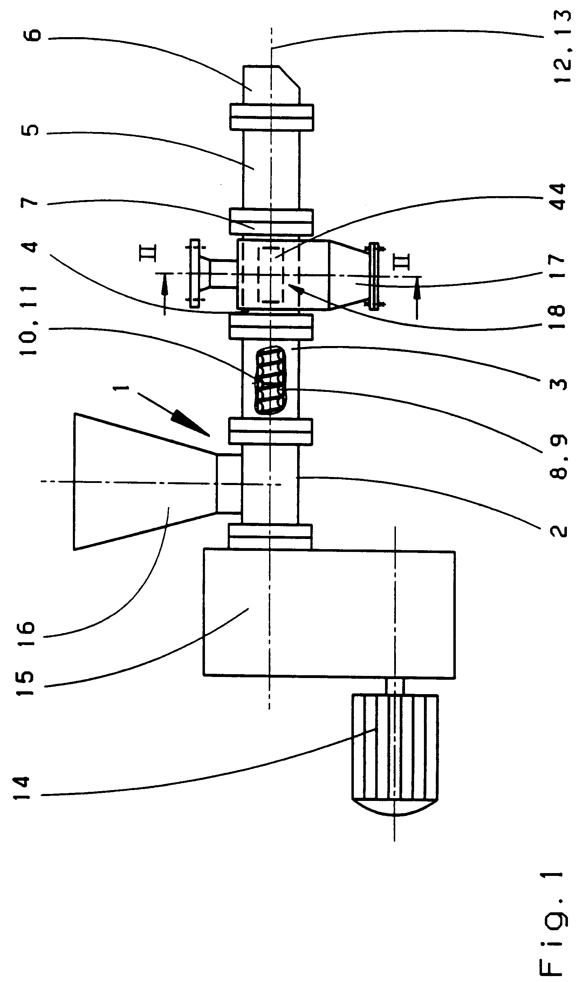

Die Kegelbohrung 30 ist wie Fig. 1 zeigt vorzugsweise im Querschnitt rechteckförmig gestaltet, wobei deren Austragsöffnung 44 in Längsrichtung der Achsen 12, 13 schlitzförmig gebildet ist.
Hierdurch ist im Bedarfsfalle eine relativ grosse Fläche der Entgasungsöffnung 18 erreicht, so dass der Schneckenabschnitt 10 in grösstmöglicher Länge erfasst ist.

Die Einsatzteile 27 und 32 weisen eine zapfenförmige in die Aussparung 28 einpassbare rechteckförmige Ausgestaltung 33 auf, deren Abmessung eine derartige Einarbeitung der Gehäusebohrungen 8 bzw. 9 in diese Einsatzteile 27,28 ermöglicht, dass eine ausreichende Überdeckung der Schneckenabschnitte 10,11 auch bei vorhandener Entgasungsöffnung 18 noch gegeben ist. Die zapfenförmige Ausgestaltung 33 weist daher den 1,2 ö 1,4 fachen Durchmessr der Schnecken 10,11 auf und belässt einen noch ausreichenden Abstand zur jeweiligen Längsachse 12,13 der Schneckenabschnitte 10,11. Hiernach richtet sich der kleinste Durchmesser der Kegelbohrung 30, der eine noch ausreichend freie Oberfläche hier der Schnecke 11 entsprechend Fig. 2 freilässt.
Beide flanschförmig ausgestalteten Teile, sowohl das Einsatzteil 27 wie auch der Einsatz 32 entsprechen in der Aussenkontur ihrer Flansche 34,35 der Aussenkontur eines Gehäuseabschnittes, so dass nach deren Einbau in den Gehäuseschuss 4 dessen Aussenabmessungen jeweils völlig mit den angegliederten Gehäuseschüssen 3 und 5 übereinstimmen. Dadurch sind die Gehäuseschüsse 2,3,4 und 5 mit denselben Heizschalen 39,40 bestückbar. Die Heizschalen 39,40 ermöglichen eine direkte Temperierung auch der Einsätze bzw. Einsatzteile 32, bzw. 27.
Dabei ist eine intensive Temperierung im thermisch schwierig beherrschbaren Zwickelbereich 41 durch zusätzliche Temperierbohrungen 42 im Gehäuseschuss 4 ermöglicht.

Die überdeckung der Oberfläche des Schneckenabschnittes 11 durch die Bohrung 9 im Einsatzteil 27 ist mittels einer taschenförmigen Erweiterung 36 entgegen der Drehrichtung der Schneckenabschnitte aufgeweitet. Dadurch ist ein guter Materialeinzug im Bereich der Entgasungsöffnung 18 erzielt und ein Materialschwund wirksam verhindert.

Die spiegelsymmetrische Anordnung und Gestaltung des Einsatzteiles 27 und des Einsatzes 32 ermöglicht auf einfache Weise einen Austausch dieser Einsätze derart, dass seitlich des Extruders wahlweise links oder rechts eine Produktentgasung erfolgen kann.
Dabei ist eine Entgasung von Kunststoffen, bei welcher die Kunststoffschmelze wie in Fig. 2 gezeigt, mittels der Schnecke 11 über die Entgasungsöffnung 18 nach oben gezogen wird insbesondere dann vorteilhaft, wenn diese in hochzäher Phase >2,5 Pas vorliegt. Hierbei wird die Kunststoffschmelze bei guter Adhäsion entgegen der Schwerkraft nach oben gebracht und auf der Schneckenoberfläche im Bereich der Entgasungsöffnung 18 zu einem dünnen Film ausgezogen. Auch eine Anordnung mehrerer in Längsrichtung des Gehäuses 1 je Gehäuseschuss 3,4 und 5 nebeneinander angeordneter Entgasungsöffnungen 18 ist bei entsprechende Extruderlänge auf diese Weise möglich.

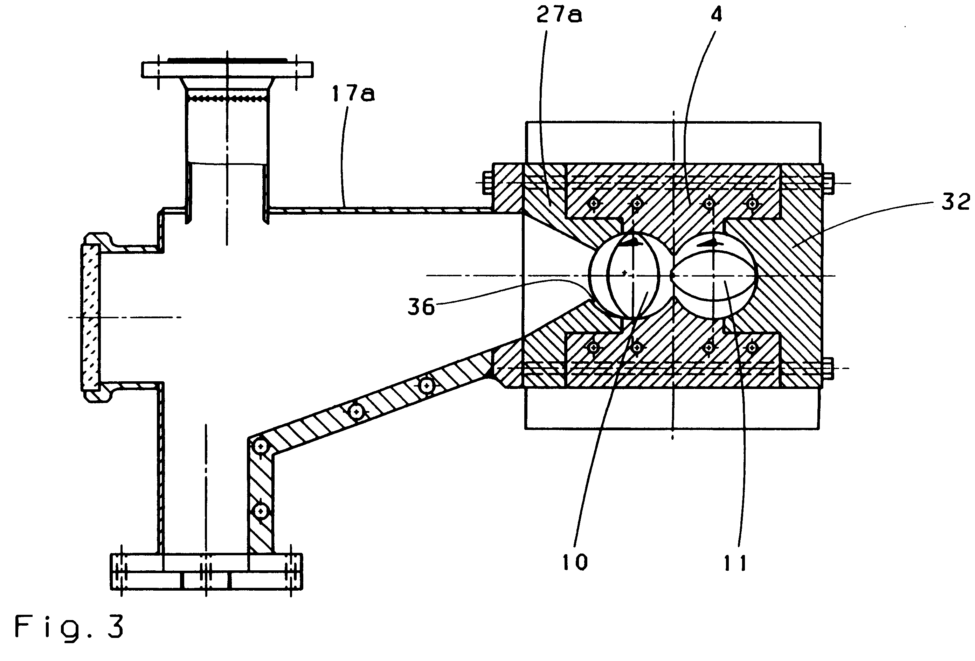

Umgekehrt ist eine um 180° vertauschte Anordnung der Entgasungsöffnung 18 mittels Einsatzteil 27 am Extrudergemäss Fig. 3 dann vorteilhaft, wenn niederviskose Produkte mit geringem Haftungsvermögen an der Schneckenoberfläche verarbeitet werden sollen. Die Entgasungskammer 17a ist hier in gleicher Weise mit dem Einsatzteil 27a verbunden wie dies in Fig. 2 gezeigt ist. Die taschenförmige Erweiterung 36 liegt hier unterhalb der Längsachsen 12, 13 der Schneckenabschnitte 10, 11.

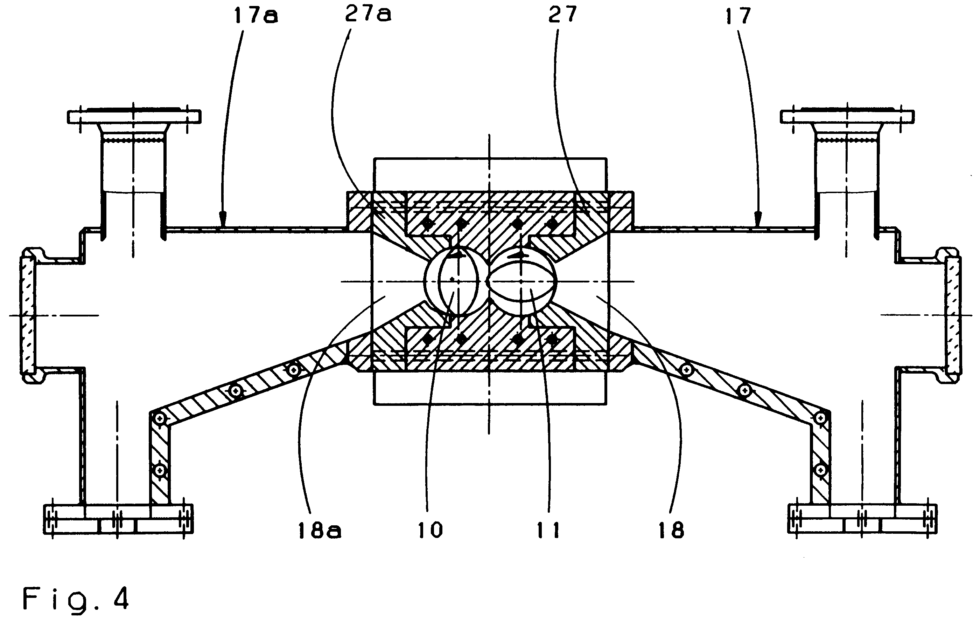

In beiden Fällen ist daher ein leichtes Umrüsten der Schneckenmaschine dadurch möglich, indem der Flansch 34 im Falle des Einsatzteiles 27 mit der Entgasungskammer 17 vom Gehäuseschuss 4 gelöst und wie in Fig. 3 gezeigt gegenüberliegend angebracht wird. Auch hier ist der Einsatz 32 dem Einsatzteil 27 spiegelbildlich gegenüberliegend angeordnet.
Dieser Vorteil einer leichten Umrüstbarkeit ist auch bei Einsatzteilen 27 mit je nach zu verarbeitendem Produkt unterschiedlicher taschenförmiger Erweiterung 36 auf gleiche Weise gegeben.
Weiterhin ist bei gefordert hohen Entgasungsleistungen von Produktschmelzen deren Zähigkeit über 2,5 Pas liegt eine gegenüberliegende Anordnung von Entgassungskammern 17, 17a möglich, wie dies Fig. 4 zeigt.
Hier bilden ebenfalls spiegelbildlich zur Mittenachse der beiden Längsachsen 12, 13 der Schneckenabschnitte 10,11 gegenüberliegend angeordnete Einsatzteile 27, 27a Entgasungsöffnungen 18, 18a. Die Befestigung der Einsatzteile 27, 27a entspricht im übrigen derjenigen nach Fig. 2 bzw. Fig. 3.

Diese Anordnung ist nach Massgabe der Erfindung jederzeit durch Entfernen einer Entgasungskammer 17 bzw. 17a und Einsetzen des Einsatzes 32 auf eine einfache Form der Entgasung nach Fig. 2 oder Fig. 3 rückbildbar.

Andererseits kann an Stelle des die Entgasungsöffnung 18 verschliessenden Einsatzes 32 ein solches Teil mit einem Anschluss für die Zuführung von Füll- und Verstärkungsstoffen in den Extruder vorgesehen sein, was jedoch hier nicht näher dargestellt ist.
In allen diesen Fällen ist die vorteilhaft ermöglichte Tauschbarkeit vom Einsatzteil 27 bzw. des Einsatzes 32 mannigfach nutzbar, ohne dass es eines besonderen Umbaus des Extruders bedarf.

## Patentansprüche

1. Entgasungsvorrichtung für eine zweiwellige Schneckenmaschine zur Aufbereitung von Kunststoffen mit einem aus mehreren Gehäuseschüssen (2,3,4,5) gebildeten Gehäuse (1), in welchem Schneckenwellen, die miteinander kämmende Schneckenabschnitte (10,11) aufweisen, in einander durchdringenden Bohrungen (8,9) drehbar angeordnet sind, wobei in mindestens einem Gehäuseschuss (4) zumindest eine radiale mit dem Innenraum (26) einer Entgasungskammer (17) verbundene Entgasungsöffnung (18) vorgesehen ist, die in einem im Gehäuseinnenraum formschlüssig eingesetzten, die Kontur eines Schneckenabschnittes (11) in Umfangsrichtung teilweise überdeckenden Einsatzteil (27) gebildet ist, dadurch gekennzeichnet, dass die Entgasungsöffnung die Form einer zum Innenraum (26) der Entgasungskammer (17) hin sich erweiternden Kegelbohrung (30) aufweist, deren Längsachse (20) in einer zwischen den Längsachsen (12,13) der Schneckenabschnitte (10,11) aufgespannten Ebene liegt.

2. Entgasungsvorrichtung nach Anspruch 1, dadurch gekennzeichnet, dass die Mantelfläche der Kegelbohrung (30) zu ihrer Längsachse (20) einen Kegelwinkel (α) von zumindest 10° einschliesst.

3. Entgasungsvorrichtung nach einem der vorhergehenden Ansprüche, dadurch gekennzeichnet, dass die Kegelbohrung (30) im Querschnitt rechteckförmig mit in Längsrichtung der Längsachse (12,13) schlitzförmiger Austragsöffnung (44) ausgebildet ist.

4. Entgasungsvorrichtung nach einem der vorhergehenden Ansprüche, dadurch gekennzeichnet, dass das Einsatzteil (27) aus einem mit dem Gehäuseschuss (4) lösbar verbundenen Flansch (34) gebildet ist, mit einer den Schneckenabschnitt (11) teilweise überdeckenden zapfenartige Ausformung (33) die im Querschnitt rechteckförmig gebildet und in einer Aussparung (28) des Gehäuseschusses (4) abdichtend geführt ist, wobei das Einsatzteil (27) in seinen symmetrisch zur Längsachse (20) der Kegelbohrung (30) gestalteten Aussenabmessungen den jeweils gleichen Abmessungen der im Längsschnitt und im Querschnitt rechteckförmigen Gehäuseschüsse (2,3,4,5) entspricht.

5. Entgasungsvorrichtung nach Anspruch 4, dadurch gekennzeichnet, dass die zapfenförmige Ausformung (33) entgegen der Drehrichtung des Schneckenabschnittes (11) taschenförmig erweitert ist.

6. Entgasungsvorrichtung nach Anspruch 4, mit mehreren radialen Entgasungsöffnungen, dadurch gekennzeichnet, dass zumindest in einem Gehäuseschuss (4) zwei symmetrisch zur vertikalen Mittelebene der beiden Längsachsen (12,13) der Schneckenabschnitte (10,11) angeordnete Einsatzteile (27,27a) vorgesehen sind, wobei deren Kegelbohrungen (30,30a) eine gemeinsame Längsachse (20) bilden.

7. Entgasungsvorrichtung nach Anspruch 6, dadurch gekennzeichnet, dass die dem Einsatzteil (27) gegenüberliegend angeordnete Entgasungsöffnung (18a) durch einen den Gehäuseinnenraum nach aussen abdichtenden Einsatz (32) verschliessbar ist, wobei dessen Aussenkontur dem Einsatzteil (27) entspricht.

8. Entgasungsvorrichtung nach einem der vorhergehenden Ansprüche dadurch gekennzeichnet, daß die obere und untere freie Außenfläche der Gehäuseschüsse (2, 3, 4, 5) mit, die Einsatzteile (27, 27 a) bzw. den Einsatz (32) beim Gehäuseschuß (4) einschließenden Heizschalen (39, 40) bestückt sind.

## Claims

1. Degassification device, for a twin-screw extruder for the preparation of synthetic materials, with a housing (1), which is formed of several housing portions (2, 3, 4, 5) and in which worm shafts, which comprise respective worm portions (10, 11) each meshing with the other, are arranged to be rotatable in interpenetrating bores (8, 9), wherein at least one degassification opening (18), which is radially connected with the interior space (26) of a degassification chamber (17) and is formed in an insert part (27), which is shape-lockingly inserted into an interior housing space and partially covers the outline of a worm portion (11) in circumferential direction, is provided in at least one housing portion (4), characterised thereby, that the degassification opening displays the shape of a conical bore (30), which widens out towards the interior space (26) of the degassification chamber (17) and the longitudinal axis (20) of which lies in a plane intersecting the longitudinal axes (12, 13) of the worm portions (10, 11).

2. Degassification device according to claim 1, characterised thereby, that the envelope surface of the conical bore (30) includes a cone angle (α) of at least 10° to its longitudinal axis (20).

3. Degassification device according to one of the preceding claims, characterised thereby, that the conical bore (30) is shaped to be rectangular in cross-section with a discharge opening (44) slot-shaped in the longitudinal direction of the longitudinal axes (12, 13).

4. Degassification device according to one of the preceding claims, characterised thereby, that the insert part (27) is formed of a flange (34), which is detachably connected with the housing portion (4), with a spigot-like projection (33), which at least partially covers the worm portion (11), is shaped to be rectangular in cross-section and is sealingly guided in a recess (28) of the housing portion (4), wherein the insert part (27) in its external dimensions, which are structured symmetrically to the longitudinal axis (20) of the conical bore (30), corresponds with the respectively same dimensions of the housing portions (2, 3, 4, 5), which are rectangular in longitudinal section and in cross-section.

5. Degassification device according to claim 4, characterised thereby, that the spigot-shaped projection (33) is enlarged in pocket shape against the direction of rotation of the worm portions (11).

6. Degassification device according to claim 4, with several radial degassification openings, characterised thereby, that two insert parts (27, 27a), which are arranged symmetrically to the vertical centre plane of both the longitudinal axes (12, 13) of the worm portions (10, 11), are provided in at least one housing portion (4), wherein their conical bores (30, 30a) form a common longitudinal axis (20).

7. Degassification device according to claim 6, characterised thereby, that the degassification opening (18a), which is arranged to be opposite the insert part (27), is closable by an insert (32) sealing the interior housing space off outwardly, wherein its external outline corresponds with the insert part (27).

8. Degassification device according to one of the preceding claims, characterised thereby, that the upper and the lower free external surface of the housing portions (2, 3, 4, 5) are equipped with heating jackets (39, 40) enclosing the insert parts (27, 27a) or the insert (32) at the housing portion (4).

## Revendications

1. Dispositif de réglage destiné à une extrudeuse (ou boudineuse) à deux vis pour la mise en oeuvre de matières de synthèse (de matières plastiques), ce dispositif comportant un corps (1) constitué de plusieurs tronçons (2, 3, 4, 5) de corps, dans lequel des vis qui présentent des segments de vis (10, 11) engrenant l'un avec l'autre sont disposées de façon rotative dans des alésages (8, 9) qui pénètrent l'un dans l'autre, au moins un orifice de dégazage (18), relié radialement à l'espace intérieur (26) d'une chambre de dégazage (17), étant prévu dans au moins un tronçon (4) de corps, lequel orifice de dégazage est formé dans une pièce (27) insérée, mise en place avec blocage par complémentarité de forme dans un espace intérieur du corps en recouvrant partiellement, dans le sens périphérique, le contour d'un segment (11) de vis, caractérisé en ce que l'orifice de dégazage (17) présente la forme d'un alésage conique (30) qui s'élargit en direction de l'espace intérieur (26) de la chambre de dégazage (17) et dont l'axe longitudinal (20) se situe dans un plan contenant les axes longitudinaux (12, 13) des segments de vis (10, 11).

2. Dispositif de dégazage selon la revendication 1, caractérisé en ce que la surface extérieure de l'alésage (30) présente un angle de cône (α) d'au moins 10° par rapport à son axe longitudinal (20).

3. Dispositif de dégazage selon l'une des revendications précédentes, caractérisé en ce que l'alésage conique (30) a une section transversale de forme rectangulaire comportant un orifice de sortie (44) en forme de fente dans la direction longitudinale de l'axe longitudinal (12, 13).

4. Dispositif de dégazage selon l'une des revendications précédentes, caractérisé en ce que la pièce (27) insérée est constituée d'une bride (34), reliée de façon démontable au tronçon (4) de corps, comportant une protubérance (33) en forme de tampon qui découvre partiellement le segment (11) de vis, et qui a une section transversale rectangulaire et qui est introduit de façon étanche dans un évidement (28) du tronçon (27), la pièce (27) insérée correspondant, par ses dimensions extérieures de forme symétrique par rapport à l'axe longitudinal (20) de l'alésage conique (30), aux dimensions identiques dans chaque cas à celles des tronçons (2, 3, 4, 5) de section longitudinale et de section transversale rectangulaires.

5. Dispositif de dégazage selon la revendication 4, caractérisé en ce que la protubérance (33) en forme de tampon est agrandie en forme de poche dans la direction inverse du sens de rotation du segment (11) de vis.

6. Dispositif de dégazage selon la revendication 4, comportant plusieurs orifices de dégazage radiaux, caractérisé en ce qu'au moins, dans un tronçon (4) de corps, deux pièces (27, 27a) insérées sont disposées symétriquement au plan médian vertical des deux axes longitudinaux (12, 13) des segments (10, 11) de vis, leurs alésages coniques (30, 30a) formant un axe longitudinal commun.

7. Dispositif de dégazage selon la revendication 6; caractérisé en ce que l'orifice de dégazage (18a) disposé en face de la pièce (27) insérée peut être fermé au moyen d'une pièce insérée (32) étanchéifiant l'espace intérieur du corps par rapport à l'extérieur, le contour extérieur de celui-ci correspondant à la pièce (27) insérée.

8. Dispositif de dégazage selon l'une des revendications précédentes, caractérisé en ce que les surfaces extérieures libres supérieure et inférieure des tronçons (2, 3, 4, 5) de corps, sont équipées de coquilles chauffantes (39, 40) qui englobent les pièces insérées (27, 27a) ou la pièce insérée (32) disposées sur le tronçon (4) de corps.
